# EUROPEAN PATENT APPLICATION

(11) **EP 2 671 488 A1**
(43) Date of publication of application: **11.12.2013**
(21) Application number: 13169831.8
(22) Date of filing: 30.05.2013
(51) Int. Cl.: A47J 45/06

(54) **Handle for kitchen utensils with a minimum encumbrance**

(30) Priority: 05.06.2012 IT MI20120967
(71) Applicant: Costa, Liberato, 80048 S. Anastasia (NA) (IT)
(72) Inventor: Costa, Liberato, 80048 S. ANASTASIA - NAPOLI (IT)
(74) Representative: Giuli, Maurizio Mario Galdino

(57) **Abstract**

A handle for kitchen utensils comprising a base (13) that can be fixed to a kitchen utensil (10) and a grip (12) rotatingly constrained to said base (13) between a first position of the grip (12) aligned with the base (13), and a second position of the grip (12) in a tilted position with respect to the base (13), a blocking mechanism of the grip (12) in said two positions, the blocking mechanism comprising an activation button (16) and blocking means, wherein the blocking means comprise a pair of circular blocking elements (18a, 18b) and blocking extensions (22, 23) which collaborate with seats (27, 26) of the circular blocking elements (18a, 18b), each blocking extension (22, 23) having a protrusion (24, 25), facing radially outwardly at its free end, which is engaged in a seat (27, 26) when the button (16) is kept in a rest position by an elastic opposing element (17). The protrusions (24) of the blocking extensions (22) are positioned at different heights.

## Description

The present invention relates to a handle for kitchen utensils with a minimum encumbrance.

In particular, the present invention relates to a handle for kitchen utensils with a minimum encumbrance which can be used in the field of kitchen utensils, such as, for example, saucepans and frying pans, and also in other fields.

Various rotatable or detachable handles, mainly used as a grip and support for saucepans and frying pans, are currently known on the market.

These known handles have a supporting base, that can be fixed to the edge of a saucepan or other kitchen utensil, and a grip associated with said base, for example rotatingly.

When the grip is rotatingly connected, during its rotation with respect to the base, at least two constraining positions can be distinguished.

In a first position, the grip is blocked in a radial position and in a second position the grip is positioned alongside the relative saucepan, frying pan or other kitchen utensil.

In this way, the possibility of rotating the grip from a radial position to an adjacent position allows the encumbrance of the saucepan or kitchen utensil to be reduced as desired, in particular when it is placed on a shelf or in a cupboard.

The rotation of the grip with respect to the base can be activated by the user by means of a button, which can also be in the form of a slide, situated on the body of the same grip.

The button, collaborating with particular blocking mechanisms, situated inside the handle, can have two positions: a first operating position and a second rest position, non-operative. In the first position, the grip is prevented from rotating with respect to the base and is used for moving the utensil or saucepan. In the second position, on the other hand, the grip is free to rotate with respect to the base up to a certain maximum angle in which it is positioned adjacent to the utensil and has a minimum encumbrance. In general, the rotation is effected around a vertical axis orthogonal to the supporting base passing through the button.

An example of this rotatable handle is described in patent FR2883153.

In this patent, the blocking mechanism of the grip with respect to the base comprises a ring translating coaxially with respect to the rotation axis of the grip activated in translation by a button situated on the body of the grip itself.

In particular, said ring can be moved inside the handle between a raised position, in which it prevents the rotation of the grip with respect to the base, and a lowered position, that can be reached by activating the button, in which the grip is free to rotate with respect to the base.

One of the drawbacks of the handle of patent FR2883153 is the complexity of the blocking mechanism of the grip with respect to the base which comprises movable elements and a blocking ring, positioned inside the handle.

Unfortunately, the blocking ring of patent FR2883153 is, on the one hand, subject to damage and/or wear due to friction against the other elements forming the blocking mechanism and, on the other, is difficult to reach.

There are other solutions which, however, only allow the grip to be rotated on one side before being positioned alongside the saucepan or utensil.

These rotatable handles cannot be used, for example, by both left- and right-handed users due to their limited rotation on one side only.

The main objective of the present invention is therefore to provide a handle that is capable of solving the drawbacks of the known art described above in an extremely simple, economical and particularly functional manner.

Another objective of the present invention is to provide a handle of the rotatable type with respect to the base fixed to the edge of a saucepan, frying pan or other kitchen utensil whose activating and blocking mechanism is composed of a minimum number of pieces.

A further objective of the present invention is to provide a rotatable handle which allows a completely functional rotation on both sides and that can therefore be adopted by ambidextrous users.

These and other objectives according to the present invention are achieved by providing a handle for kitchen utensils with a minimum encumbrance as specified in claim 1.

A handle of this kind has a variable encumbrance on both sides of its rotation to bring it from an operative position of use of the saucepan or utensil to the rest position at the side of the functional part of the kitchen utensil with a minimum encumbrance.

Further characteristics of the handle are object of the dependent claims.

The characteristics and advantages of a handle for kitchen utensils with a minimum encumbrance according to the invention will appear more evident from the following illustrative and non-limiting description, referring to the enclosed schematic drawings in which:
- figure 1 is a longitudinal section of the handle for kitchen utensils with a minimum encumbrance according to the present invention according to the line I-I of figure 2;
- figure 2 is a plan view from above of the handle of the present invention;
- figure 3 is an enlarged transversal sectional view according to the line III-III of figure 2;
- figures 4 and 5 are perspective views from different observation points of the handle of figure 2 in an exploded view;
- figures 6 and 7 are perspective views of the base only, of the pair of shaped circular blocking elements and button in an exploded view;

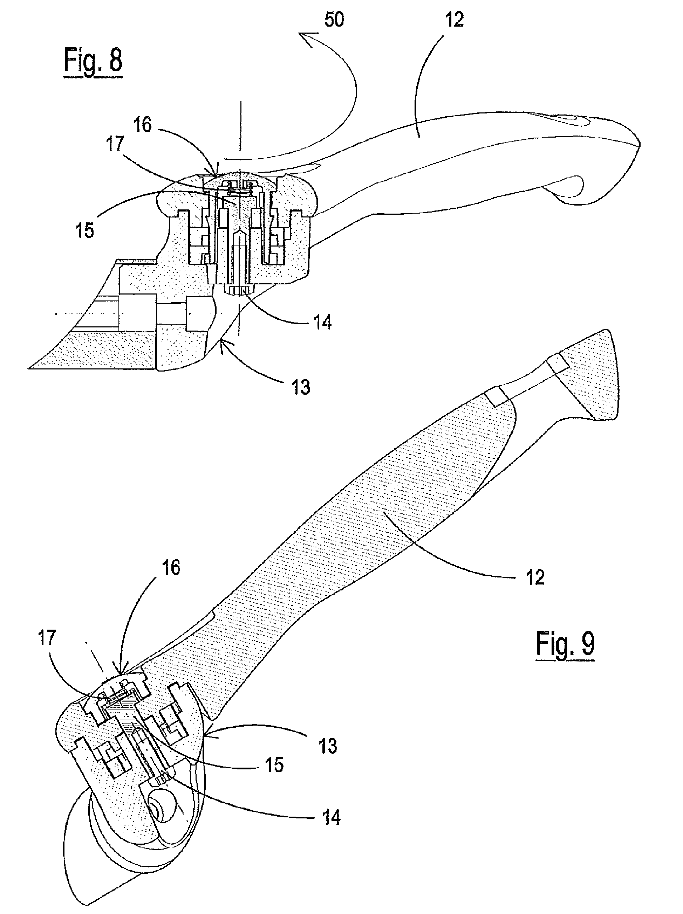

- figures 8, 9 are partially sectional views according to the lines VIII-VIII and IX-IX of figure 10, with the button pressed and grip in rotation phase towards the container to which the handle is constrained;
- figure 10 is a plan view with the button pressed and grip in rotation phase towards the container to which the handle is constrained.

With reference to the figures, these show a handle for kitchen utensils with a minimum encumbrance, according to the invention, indicated as a whole with 11.

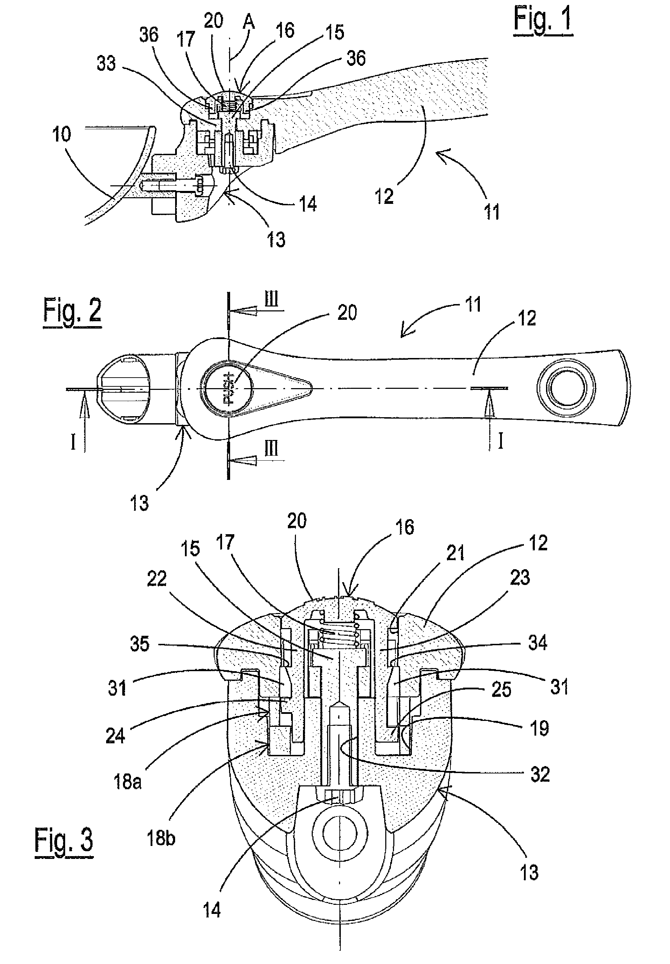

The handle 11 is shown assembled and in section in figure 1 and comprises a grip 12 rotatingly associated with a base 13 that can be fixed to an edge 10 of a saucepan or frying pan or any other similar utensil, only partially shown.

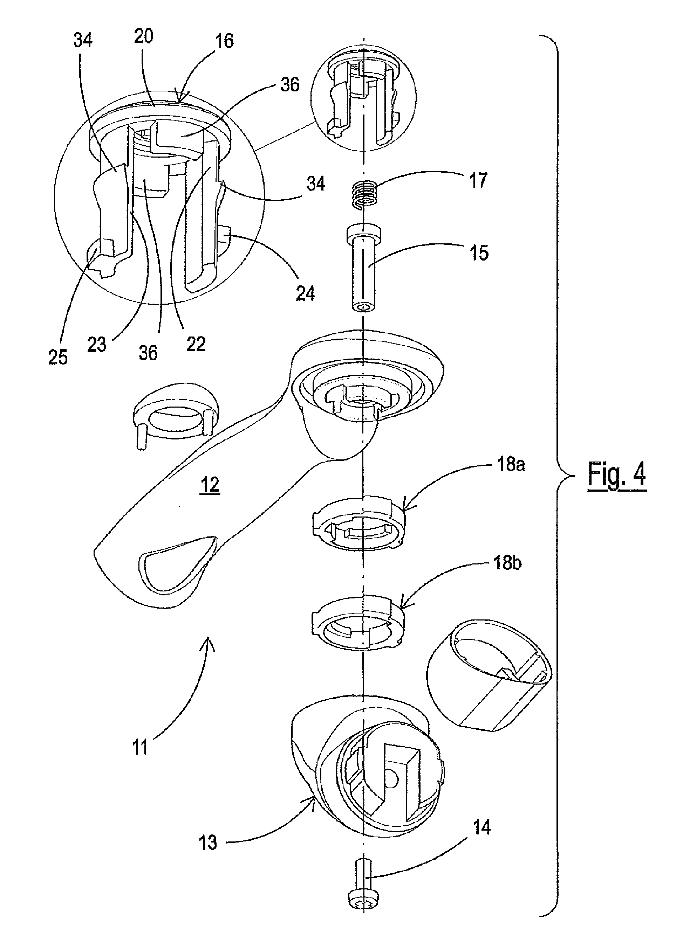

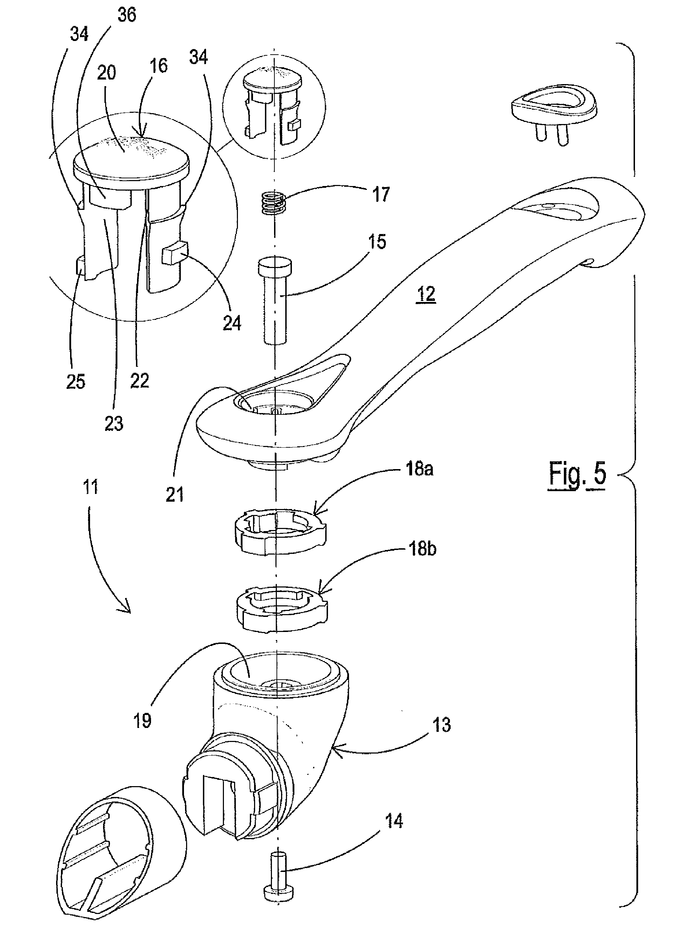

The grip 12 is associated with the base 13 through connection means such as those shown exploded in figures 4 and 5. Said connection means in the example comprise a screw 14 which passes through the same base 13 and is engaged with a bush 15. The bush 15 is aligned above with a button 16 protruding from the grip 12.

The bush 15 is engaged with the button 16 thanks to interposed elastic means, for example a spring 17.

The button 16 is envisaged as an activation means for releasing or blocking the rotation of the grip 12 with respect to the base 13. The button 16, in fact, in its raised position, caused by the spring 17, rotatingly constrains the grip 12 with respect to the base 13. When, on the other hand, the button 16 is brought to a lowered position, by the action of the user's finger, it releases the rotation of the grip 12 with respect to the base 13.

In particular, according to the invention, the grip 12 can be brought into three different angular positions in all of which its rotation is prevented with respect to the base 13.

More specifically, for the use of the handle as a gripping and handling element of the utensil, there is a first position in which the grip 12 is blocked in a radial position with respect to the saucepan or kitchen utensil aligned with the base 13.

The handle can also be in a second non-operative rest position, in which the grip 12 is situated alongside the relative saucepan, frying pan or other kitchen utensil, rotated with respect to the base 13 constrained to the utensil.

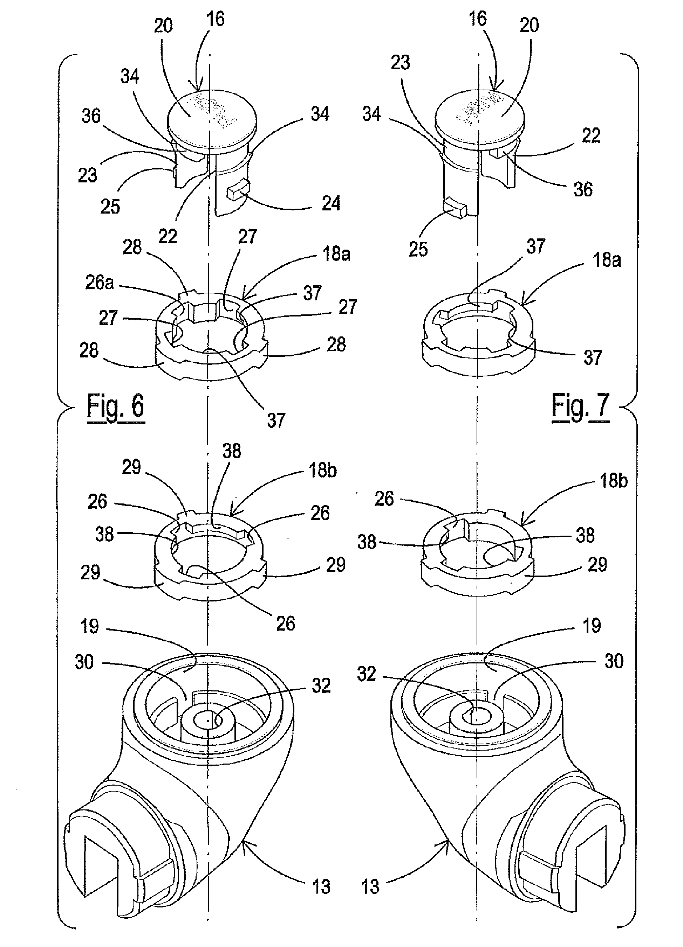

In other words, starting from the position which can be seen in figure 1, by pressing the button 16 the rotation of the grip 12 can be released in the direction indicated by an arrow 50 of figure 6. Said rotation is possible until a particular angle is reached, in which the button 16 automatically rises, due to the spring 17, and the grip 12, alongside the utensil, is blocked again.

In particular, according to the present invention, the grip 12 can also rotate, again after pressing the button 15, in the opposite direction to that of the arrow 50, also in this case acquiring a rest position alongside the utensil, diametrically opposite the previous position, not shown in the figures.

In both cases, the rotation of the grip 12 is effected around a vertical axis A coinciding with the insertion axis of the screw 14 and bush 15. The handle 11 is also equipped with a blocking mechanism of the rotation of the grip 12 with respect to the base 13.

This blocking mechanism comprises a pair of circular shaped blocking elements 18a and 18b. This pair of circular shaped blocking elements 18a and 18b is positioned in a cavity 19 of the base 13 of the handle 11. Said pair of circular shaped blocking elements 18a and 18b selectively collaborates with the button 16 for blocking or releasing the grip 12 with respect to the base 13. In particular, according to the present invention, said circular shaped blocking elements 18a and 18b are constrained in both rotation and translation with respect to the base 13 by means of their protruding teeth 28 and 29 which are inserted in grooves 30 of the base 13.

The button 16, as can be better seen in figures 4 and 5, comprises an activation head 20, essentially cylindrical and protruding outside the grip 12 and which is at least partially housed in a groove or pass-through seat 21 of the grip 12. Two blocking extensions 22 and 23 extend downwards from the periphery of the activation head 20, inside the groove 21 and as far as the circular shaped blocking elements 18a and 18b towards the inside of the handle 11. Each of the blocking extensions 22 and 23 has a protrusion 24 and 25 facing radially towards the outside at their free ends. The protrusion 24 of one of the blocking extensions 22 is situated at a different height with respect to the other protrusion 25 of the other blocking extension 23.

Free connecting ends are therefore created by the protrusions 24 and 25 protruding outwardly with respect to each blocking extension 22 and 23.

In particular, when the button 16 is in a raised position, the connecting ends 24 and 25 are blocked in rotation in seats 26 and 27 situated inside the pair of circular elements 18a and 18b. More specifically, the end 25 is inserted in one of the seats 26 of the circular element 18a, whereas the end 24 is inserted in one of the seats 27 of the circular element 18b positioned below in the drawings. It should be noted that the upper circular element 18a also comprises a further seat 26a aligned with respect to the underlying seat 26 situated in the circular element 18b positioned below. This arrangement allows a correct assembly of the button or passage of the connecting end 25 envisaged on the blocking extension 23.

In a lowered position of the button 16, on the other hand, the connecting ends 24 and 25 are released from said seats 26 and 27, allowing the rotation of the grip 12.

As already indicated, the grip 12 comprises a pass-through seat 21 open above for receiving the activation head 20 of the button 16. The pass-through seat also comprises pass-through openings 31 (visible in figure 3), positioned oppositely and symmetrically with respect to each other, for the passage of the connecting ends 24 and 25 of the blocking extensions 22 and 23. A central hole 32 is also envisaged, having a limited dimension, situated in a lower closed base 33, for the passage of the stem of the bush 15.

In the sectional view of figure 3, it can be seen how, with the handle 11 assembled, the connecting ends 24 and 25 pass beyond the openings 31, reaching the pair of circular elements 18a and 18b superimposed below the lower closing base 33.

To prevent the button 16 from becoming detached from the seat 21 of the grip 12, the blocking extensions 22 and 23 have protrusions 34 radially facing outwardly, in an intermediate position. These protrusions 34, radially facing the outside of the button 16, allow a click-insertion in the groove 21, but not the subsequent detachment: with the handle 11 assembled, in fact, they are buffered below against stop portions 35 protruding inside the groove 21.

In this way, the free rising of the button 16 under the thrust of the spring 17 outside the seat 21 is blocked.

Figure 1 also shows how the button 16 comprises two constraining extensions 36, symmetrical to each other and arranged alternatingly with respect to the pair of blocking extensions 22 and 23.

Said pair of constraining extensions 36, when the handle 11 is assembled, are constrained in the groove 21 so as to prevent the rotation of the button 16 with respect to the grip 12.

As already indicated, inside the base 13 and below the lower closed base 33, there is a pair of superimposed circular elements 18a and 18b constrained in both rotation and translation with respect to the base 13.

As described, said superimposed circular elements 18a and 18b comprise seats 26, 27 which receive the connecting ends 24 and 25, positioned at different heights, blocking the grip 12 in rotation.

Furthermore, each of the superimposed circular elements 18a and 18b envisages that said seats 27 of the upper circular element 18a and said seats 26 of the lower circular element 18b extend, from both side in a parallel plane to that on which they are lying, beneath arched portions 37 and 38 protruding inwardly from the internal side surface of each of the superimposed circular elements 18a and 18b. These arched portions 37 and 38 act as guiding elements of the connecting ends 24 and 25 of the blocking extensions 22 and 23 during the rotation of the grip 12 of the handle from one position to another, when released with respect to the base 13 by pressure on the activation head 20 of the button 16.

In particular, these arched portions 37 and 38 extend from a seat 27 and 26 as far as a subsequent seat 27 and 26 in which the connecting ends 24 and 25 are engaged when rotated and when pulled upwards through the elastic force of the spring 17.

The seats 27, 26 of the circular blocking elements 18a, 18b are in such a number as to allow the rotation of the grip 12 with respect to the base 13 on both sides with respect to the radial perpendicular operative position with respect to said kitchen utensil 10, as shown in figures 1 to 3.

When the grip 12 is constrained with respect to the base 13, the connecting ends 24 and 25 of the blocking extensions 22 and 23 are blocked in the respective seats 27 and 26 of the two superimposed circular elements 18a and 18b, as in figure 1.

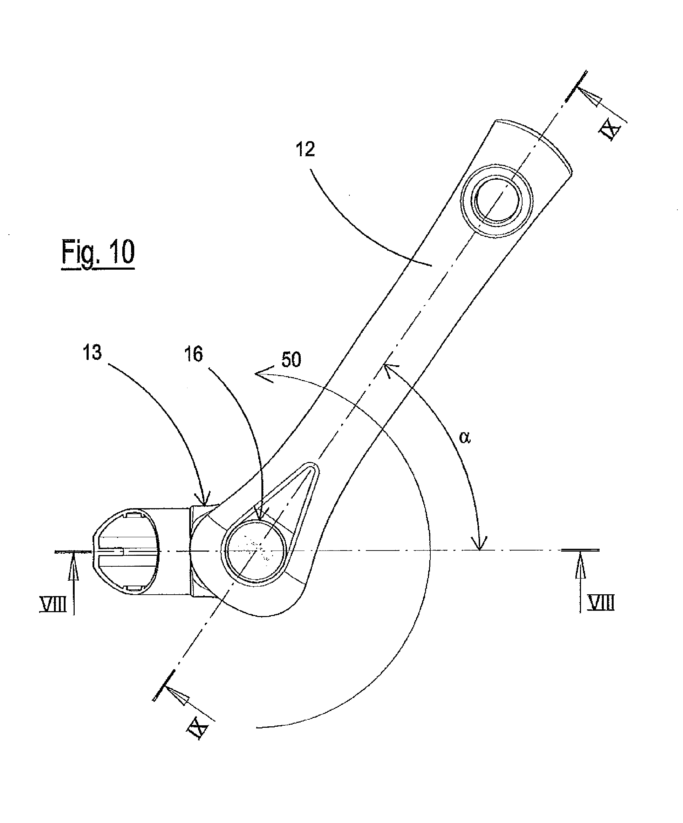

By acting on the button 16, by pressing it and compressing the spring 17, the connecting ends 24 and 25 of the blocking extensions 22 and 23 move downwards, they become disengaged from the seats 27 and 26 and can be moved below the arched portions 37 and 38 that are guiding them. In this way, by rotating the grip 12 either to the right or left, it can be brought to a position rotated by a certain angle α as desired, more or less alongside the edge 10 of a saucepan or frying pan or other similar utensil, as shown in figure 10.

In this position, the presence of a further seat 27 and 26 allows the blocking elements 22 and 23 to be inserted in the connecting ends 24 and 25 as the button is lifted thanks to the action of the spring 17. The grip 12 is therefore in a position of minimum encumbrance at the right or left side of the kitchen utensil.

This is the functioning of the handle according to the present invention.

The characteristics of the device, object of the present invention, as also the relative advantages, are evident from the above description.

The handle of the present invention, in fact, comprises a blocking mechanism composed of a minimum number of pieces and without any movable elements situated inside the handle.

Thanks to the different height of the connecting ends 24 and 25 engaged with different superimposed circular elements 18a and 18b, it also allows the rotation of both sides and can therefore be adopted by ambidextrous users.

Finally, the device thus conceived can obviously undergo numerous modifications and variants, all included in the invention; furthermore all the details can be substituted by technically equivalent elements. In practice, the materials used, as also the dimensions and rotation angles of the grip, can vary according to technical requirements.

## Claims

1. A handle for kitchen utensils with a minimum encumbrance comprising a base (13) that can be fixed to a kitchen utensil (10) and a grip (12) rotatingly constrained to said base (13) between a first position, in which said grip (12) is constrained substantially aligned with said base (13), and a second position, in which the grip (12) is constrained in a tilted position with respect to the base (13), a blocking mechanism of said grip (12) being envisaged in said two positions with respect to said base (13), said blocking mechanism comprising an activation button (16) and associated blocking means for defining said two positions, **characterized in that** said blocking means comprise a pair of circular blocking elements (18a, 18b), arranged superimposed and fixed inside said base (13), and blocking extensions (22, 23) that extend below said button (16) inside said circular blocking elements (18a, 18b) to collaborate with seats (27, 26) of said circular blocking elements (18a, 18b), each of said blocking extensions (22, 23) having a protrusion (24, 25), facing radially outwardly at their free ends, which is engaged in said seats (27, 26) when said button (16) is kept in a rest position by an elastic opposing element (17) positioned between said button (16) and said grip (12).

2. The handle according to claim 1, **characterized in that** said protrusion (24) of a blocking extension (22) is at a different height with respect to the other protrusion (25) of the other blocking extension (23).

3. The handle according to claim 1 or 2, **characterized in that** said seats (27, 26) of said circular blocking elements (18a, 18b) are in such a number as to allow the rotation of said grip (12) with respect to said base (13) on both sides with respect to the radial perpendicular operative position with respect to said kitchen utensil (10).

4. The handle according to claim 2, **characterized in that** the circular blocking element (18a) positioned above comprises a further seat (26a) aligned with respect to an underlying seat (26) situated in the circular blocking element (18b) positioned below for the assembly of the button (16).

5. The handle according to one or more of the previous claims, **characterized in that** said seats (27) of the upper circular blocking element (18a) and said seats (26) of the circular lower blocking element (18b) extend, from both sides on a plane parallel to that on which said circular blocking elements (18a, 18b) are lying, below arched portions (37, 38) protruding inwardly from the internal side surface of each of the superimposed circular elements (18a, 18b).

6. The handle according to claim 5, **characterized in that** said arched portions (37, 38) extend from a seat (27, 26) as far as a subsequent seat (27, 26) in which said connecting ends (24, 25) are engaged when rotated and when pulled upwards by the force of the elastic opposing element (17).

7. The handle according to one or more of the previous claims, **characterized in that** said circular shaped blocking elements (18a and 18b) are constrained in both rotation and translation with respect to the base (13) by means of their protruding teeth (28 and 29) which are inserted in grooves (30) situated in a cavity (19) of the base (13).
